# EUROPEAN PATENT SPECIFICATION

(11) **EP 1 317 334 B1**
(45) Date of publication and mention of the grant of the patent: **08.06.2005**
(21) Application number: 01966921.7
(22) Date of filing: 11.09.2001
(51) Int. Cl.: B29D 1/00

(54) **PIPE FORMING APPARATUS FOR VARYING THE VOLUME OF PLASTIC ALONG THE PIPE WALL**
ROHRFORMVORRICHTUNG MIT EINER REGELUNG DES KUNSTSTOFFVOLUMENS LÄNGS DER ROHRWANDUNG
APPAREIL DE FABRICATION DE TUYAUX REGULANT LE VOLUME DE PLASTIQUE LE LONG DE LA PAROI D'UN TUYAU

(30) Priority: 11.09.2000 US 659534
(43) Date of publication of application: 11.06.2003
(73) Proprietor: Lupke, Manfred Arno Alfred, Thornhill Ontario L3T 1W6 (CA); Lupke, Stefan, A., Thornhill, Ontario L3T 1X6 (CA)
(72) Inventor: Lupke, Manfred Arno Alfred, Thornhill Ontario L3T 1W6 (CA); Lupke, Stefan, A., Thornhill, Ontario L3T 1X6 (CA)
(74) Representative: Otten, Hajo, Dr.-Ing.
(86) International application number: PCT/CA2001/001267
(87) International publication number: WO 2002/020253

(56) References cited:
- EP-A- 0 385 465
- US-A- 4 003 685
- US-A- 5 346 384
- US-A- 5 405 569
- US-A- 5 466 402
- US-A- 5 472 659

## Description

The present invention relates to a product forming apparatus having an extruder die with a supply channel which terminates with a channel mouth feeding plastic to a moving mold tunnel comprising mold blocks of different mold block shapes which move past said channel mouth to form a product wall of varying configuration.

Such a product forming apparatus is known from document US-A-5,405,569.

The present invention thus relates to product forming apparatus for forming a continuous length of plastic products such as plastic pipe or the like.

In an apparatus designed to produce a continuous length of product such as plastic pipe it is often desirable to vary the amount of plastic deposited at certain regions along the wall of the product. Apparatus for making this type of product typically includes a moving mold tunnel. In an effort to vary the amount of material fed to the moving mold tunnel, attempts have been made to either speed up or slow down the plastic feed from the extruder to the mold tunnel, see US-A-5,346,384. This however creates a very serious potential safety hazard within the extrusion equipment.

The present invention relates to apparatus for varying thickness in the wall of a continuous length of product made in a plastic forming apparatus using an extruder feeding to a moving mold tunnel. The apparatus does not contemplate the speeding up or slowing down of the plastic flow from the extruder to the mold tunnel and therefore avoids the prior art safety concerns.

According to the invention, the product forming apparatus mentioned at the outset is characterized in that said channel mouth has an adjustable mouth gap which automatically adjusts in gap size according to which one of the mold block shapes is moving past the channel mouth to effect changes in thickness of the plastic along the product wall.

The channel mouth has an adjustable gap which automatically adjusts in gap size according to which particular mold block shape is moving past the channel mouth. This adjustment of the channel mouth adjusts the plastic flow through from the channel to affect changes in thickness of the plastic along the product wall.

According to a particular aspect of the present invention, the apparatus comprises a pipe forming apparatus and the mouth gap is adjusted in size to maintain a constant volume to axial length ratio of the plastic along the pipe wall as to be described later in detail.

The above as well as other advantages and features of the present invention will be described in greater detail according to the preferred embodiments of the present invention in which;
Figure 1 is a cross sectional view of a corrugated region of a pipe wall made in accordance with the present invention;
Figure 2 is a view similar to Figure 1 with the exception that it shows the straightened length of the corrugated region indicated at 2-2 in Figure 1. Figure 3 is a sectional view of a pipe wall including a coupling region made in accordance with a prior art apparatus and labelled prior art;
Figure 4 is a further sectional view of a pipe wall including a coupling region made in accordance with the present invention;
Figure 5 is a sectional view of the plastic feed to moving mold tunnel region of a pipe molding apparatus according to a preferred embodiment of the present invention;
Figures 6 through 8 are enlarged sectional views showing the channel mouth in various different operating positions for feeding plastic to the moving mold tunnel of Figure 5;
Figures 9 through 11 are further enlarged sectional views of the channel mouth showing different operating devices for affecting adjustment of the channel mouth.

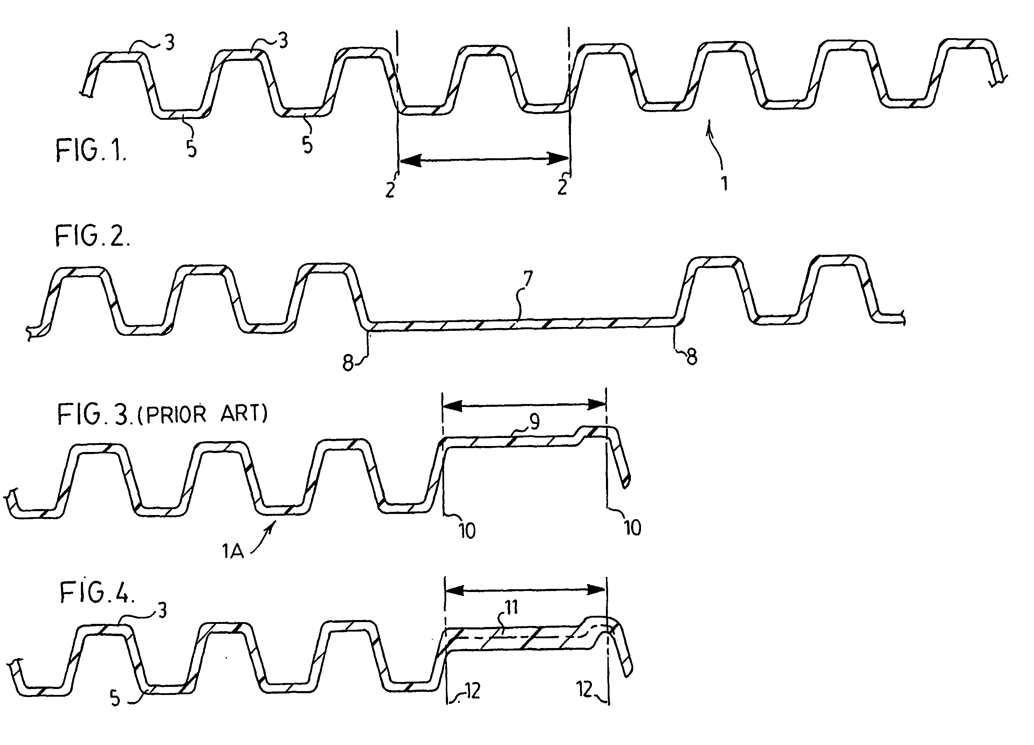

Figure 1 shows a corrugated section of a pipe wall generally indicated at 1 and made in accordance with the present invention. This corrugated pipe wall section comprises a plurality of alternating crests and troughs 3,5 respectively. Lines 2-2 designate the axial length of the pipe covered by two of the troughs and one of the crests between those two troughs.

Figure 2 indicates at area 7, the axial length of the pipe region between the lines 2-2 of Figure 1 when this pipe region is straightened out. Area 7 is bordered by end lines 8-8. The separation between lines 8-8 is much greater than the separation between lines 2-2 as can be seen in comparing Figures 1 and 2.

Figure 3 shows a section of pipe wall generally indicated at 1a. This pipe wall includes a substantially straight coupling indicated at 9 formed in the pipe wall. Coupling 9 is bordered to its opposite ends by lines 10-10.

In comparing Figures 1 and 3, it will be seen that the axial length of the pipe wall between lines 2-2 spanning the two troughs and the one crest is identical to the axial length of the pipe wall between the lines 10-10 spanning the coupling 9. It will also be seen in comparing Figures 2 and 3 that the straightened length of the two troughs and the single crest between the lines 8-8 is substantially greater than the axial length of the pipe wall at the coupling between lines 10-10.

The purpose of describing all of the above dimensions is to show that substantially more material is required to form the corrugations than is required to form the coupling if the two have the same wall thickness. This is because the straightened length of the corrugations is substantially greater than the already substantially straight length of the coupling.

Figure 4 once again shows a section of the pipe wall 1 from Figure 1 formed with the crests and troughs 3 and 5 respectively and also formed with a coupling region 11. This coupling region is bordered by the end lines 12-12 having the same separation as the end lines 10-10 bordering the coupling 9 of pipe la in Figure 3. However, in Figure 4, the coupling region 11 has a much greater volume of plastic in the pipe wall 1 than is found in the coupling 9 of pipe wall la of Figure 3, i.e. the wall of coupling 11 is thicker than the wall of coupling 9.

Specifically, the thickness of the plastic in coupling 11 in Figure 4 is such that the volume of plastic used is the same as the volume of plastic used to make the two troughs and the single crest between the lines 2-2 in Figure 1. Accordingly, there is a constant volume to axial length ratio of plastic along the pipe wall of Figure 4. This is achieved by thickening the plastic at the coupling relative to the corrugated region of the pipe wall or conversely by thinning the plastic in the corrugated region in the pipe wall relative to the coupling region of the pipe wall.

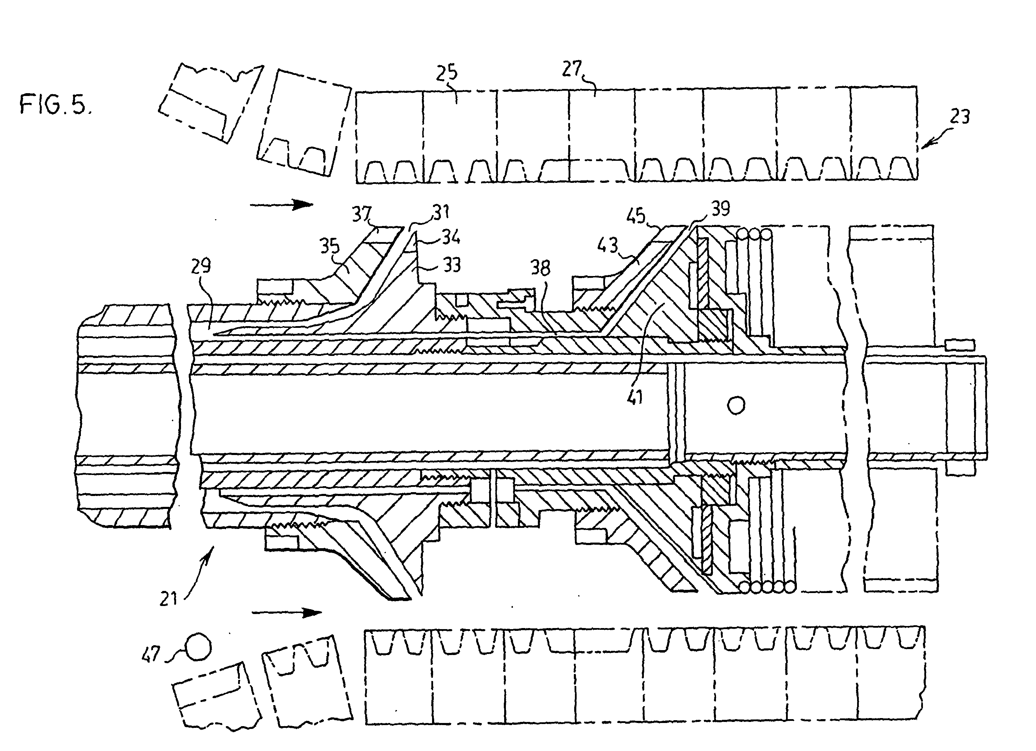

The means to produce the varying of the thickness along the pipe wall is described having reference to Figures 5 through 11 of the drawings. More particularly, Figure 5 shows die equipment 21 which is fed from an extruder not shown in the drawings. Die equipment 21 designed to make double wall pipe has a first plastic feed channel 29 terminating with a channel mouth 31 and a second plastic feed channel 38 terminating with a channel mouth 39. These two channel mouths guide the feed of plastic through the plastic flow channels to a moving mold tunnel generally indicated at 23. This mold tunnel is formed from mold block sections 25 and 27. The two mold block sections have varying configurations in that mold block section 25 has an interior surface to form the corrugations in the pipe wall while mold block section 27 is shaped to form the coupling in the pipe wall.

Channel mouth 31 is bordered to its downstream side by guide 33 and to its upstream side by guide 35. Guide 33 includes a tip portion 34, while guide 35 includes its own tip portion 37.

Channel mouth 39 is bordered to its downstream side by a guide 41 and to its upstream side by a guide 43 having a tip portion 45.

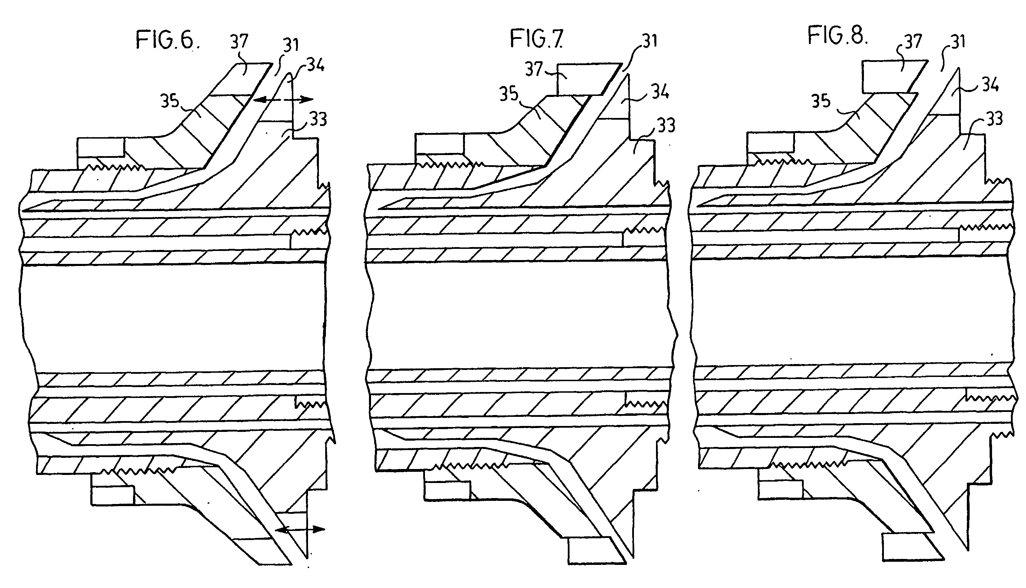

As will be seen in comparing Figures 6, 7 and 8, the tip portion 37 of guide 35 (as is also the case with the tip portion 45 of guide 43) is adjustable to vary the size of the gap between the upstream and the downstream guides to the opposite side of channel mouth 31. This adjustment which produces a variation in the size of the mouth gap of the channel changes the amount of plastic exiting the channel. In accordance with a preferred feature of the present invention, the gap size change occurs automatically according to which particular mold block shape is passing by the channel mouth.

In comparing Figures 6 and 7, it will be seen that the tip portion 37 of guide 35 has moved to a more downstream position which reduces the mouth gap which in turn reduces the amount of plastic exiting the channel mouth. This is to be compared to the Figure 8 position in which the guide tip 37 is moved to a more upstream position where the gap of the channel mouth has been increased. With this increased gap, more plastic is allowed to flow out of the channel mouth. By way of example only, Figure 7 might well be the normal position of the upstream channel mouth guide used to form the corrugations in the pipe wall. However, as the coupling part of the pipe wall is produced the tip guide would move to the Figure 6 position to allow more plastic to flow to the thickened pipe coupling. However, the volume of plastic to axial length ratio of the plastic used in forming the coupling in the corrugations will end up being the same between the corrugated and the coupling region of the pipe. Once again, this occurs because the actual, i.e. the straightened length of the thinner walled corrugations is substantially greater than the already substantially straight length of the thicker coupling.

In accordance with the present invention, the varying of the channel mouth gap occurs automatically according to pipe wall shape changes. This can be done in a number of different ways. For example, the apparatus can simply be programmed to increase the channel mouth size as the coupling forming mold block sections pass the channel mouth and to decrease the coupling mouth size as the corrugation forming mold block sections pass the channel mouth. In the alternative, sensing means such as sensor 41 can be provided in the apparatus to sense the particular type of mold block section approaching the channel mouth which will then be adjusted accordingly.

It is to be understood that the operation of the guide at the mouth of the downstream channel 39, when it is required to vary the thickness in the inner wall of the pipe, is identical to that described immediately above. It is also to be understood that the upstream channel mouth size can be varied through the use of movable guide tip 34 on the downstream guide 33 either alone or in conjunction with the operation of guide tip 37 as already described.

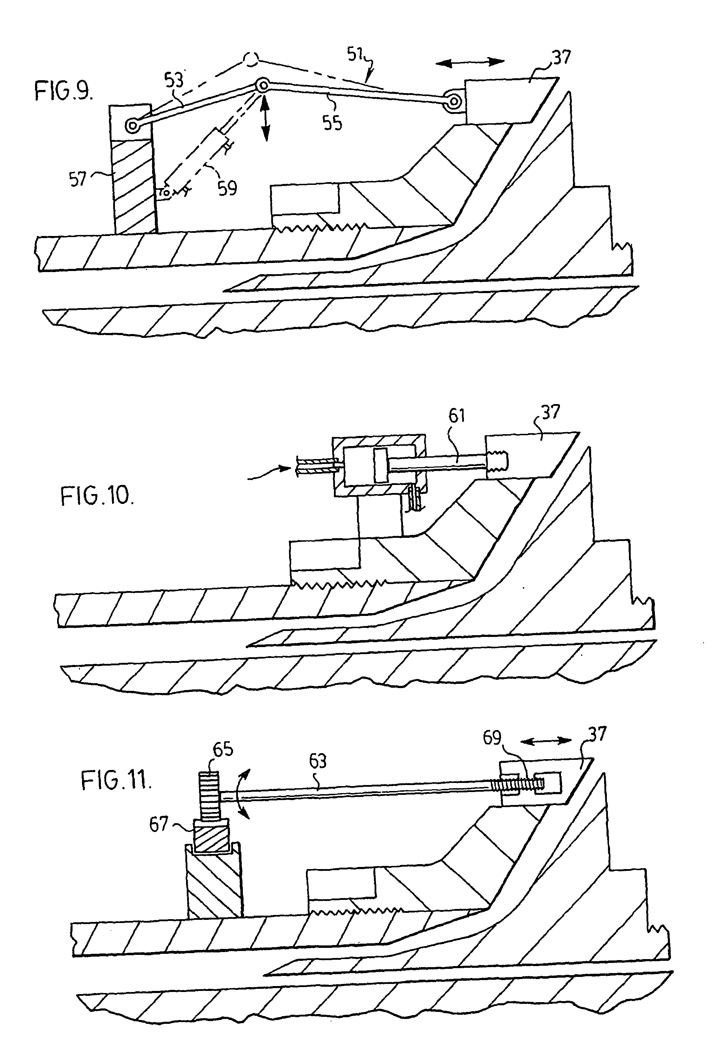

Figures 9 through 11 show various different set ups which can be used for operating any one of the movable guide tips. More particularly, Figure 9 shows a cantilever device generally indicated at 51. This cantilever device comprises a pair of pivotally attached rod members 53 and 55 attached respectively to fixed rod support 57 and tip guide 37. A piston member 59 also supported at one end by support 57 has its other end attached to the two pivotal rod members. When piston member 59 is extended, it causes a folding action between rod members 53 and 51 to move them to the dotted line position of Figure 9 pulling in an upstream direction on guide tip 37. This causes an opening in the channel mouth.

When piston member 59 is retracted, it pulls rod member 51 and 53 to a more straightened position to produce a downstream pushing on guide tip 37 to decrease the gap of the channel mouth.

Figure 10 shows a plunger member 61 which attaches directly to guide tip 37. This plunger member, which is preferably electrically activated operates to either push the guide tip in a downstream direction to narrow the channel mouth or to pull the guide tip in an upstream direction to open the channel mouth.

Figure 11 shows a further set up for moving the guide tip 37 comprising a fixed length rod 63 extending from a rotary gear 65 coupled to a fixed gear 67. Rod 63 has a downstream end 69 which is threadably engaged with guide tip 37. The rotation of the rod by the gear combination 65 and 67 produces a threading action in one direction of rotation of the rod and an unthreading action in the other direction of rotation of the rod relative to the guide tip to either widen or narrow the channel mouth.

It is to be understood that the three set ups described immediately above in Figures 9 through 11 are only some of many different types of adjustment arrangements which can be used to adjust or vary the positioning of the guide tip.

Another way of varying the thickness of the plastic laid at different locations on the wall of product is to adjust the speed of the corrugator, i.e. the moving mold blocks. At a constant plastic flow from the channel mouth the wall thickness decreases with increasing corrugator speed and the wall thickness increases with decreasing corrugator speed. Further adjustments can be made by changing the corrugator speed while simultaneously adjusting the size of the mouth gap.

It is also to be understood that although the above description does refer to maintaining a constant volume to axial length ratio of the plastic along the product wall, there may be cases in which it is desirable to either increase or decrease the volume of plastic at a specific region of the product wall relative to the other regions of the product wall. This is once again achieved by varying the gap of the channel mouth, by varying the speed of the moving mold tunnel or by a combination of varying the gap of the channel mouth while at the same time varying the speed of the moving mold tunnel.

Although various preferred embodiments of the present invention have been described in detail, it will be appreciated by those skilled in the art that variations may be made within the scope of the appended claims.

## Claims

1. Product forming apparatus having an extruder die (21) with a supply channel (29, 38) which terminates with a channel mouth (31, 39) feeding plastic to a moving mold tunnel (23) comprising mold blocks of different mold block shapes (25, 27) which move past said channel mouth to form a product wall of varying configuration (3, 11), said apparatus being **characterized in that** said channel mouth has an adjustable mouth gap which automatically adjusts in gap size according to which one of the mold block shapes (25) (27) is moving past the channel mouth to affect changes in thickness of the plastic along the product wall.

2. Product forming apparatus as claimed in Claim 1 wherein said apparatus comprises an apparatus for making a pipe wall **characterized in that** said different mold block shapes comprise alternating crest and trough shapes (25) and a generally straight shape (27).

3. Product forming apparatus as claimed in Claim 2 **characterized in that** said mouth gap (31, 39) adjusts in gap size to maintain a constant volume to axial length ratio along the pipe wall.

4. Product forming apparatus as claimed in Claim 3 wherein said channel mouth (31, 39) has upstream and downstream mouth guides (35, 33) (43, 41) to opposite sides of said channel mouth **characterized in that** at least one of said mouth guides has a moveable part (37, 49) which automatically adjusts to adjust the mouth gap to maintain the constant volume to axial length ratio along the pipe wall.

5. Product forming apparatus as claimed in Claim 4 **characterized by** a length adjustable member (51) for adjusting the moveable part (37) of said one of said mouth guides (35).

6. Product forming apparatus as claimed in Claim 4 **characterized by** a threaded member (63) for adjusting said moveable part (37) of said mouth guide (37).

7. Product forming apparatus as claimed in Claim 1 **characterized in that** said apparatus is preprogrammed to provide adjustment of said mouth gap.

8. Product forming apparatus as claimed in Claim 2 **characterized by** a sensor (41) to sense the different mold block shapes (25) (27) and to provide for the automatic adjustment of the mouth gap.

9. Product forming apparatus as claimed in Claim 3 **characterized by** means which adjusts speed of the moving mold tunnel and which cooperates with the automatically adjustable mouth gap to maintain the constant volume to axial length ratio of the plastic along the pipe wall.

## Patentansprüche

1. Produktformvorrichtung mit einer Extruderdüse (21) mit einem Zufuhrkanal (29, 38), der in einer Kanalmündung (31, 39) endet, die Kunststoff zu einem wandernden Formtunnel (23) zuführt, der Formblöcke mit unterschiedlichen Formblockausgestaltungen (25, 27) aufweist, wobei die Formblöcke an der Kanalmündung vorbei wandern, um eine Produktwand von wechselnder Gestaltung (3, 11) zu formen, wobei die Vorrichtung **dadurch gekennzeichnet ist, dass** die Kanalmündung einen justierbaren Mündungsspalt aufweist, der sich bezüglich der Spaltgröße in Abhängigkeit davon automatisch einstellt, welche der Formblockausgestaltungen (25, 27) an der Kanalmündung vorbei wandert, um so Änderungen in der Dicke des Kunststoffes längs der Produktwand zu bewirken.

2. Produktformvorrichtung nach Anspruch 1, bei der die Vorrichtung eine Vorrichtung zur Fertigung einer Rohrwand umfasst, **dadurch gekennzeichnet, dass** die verschiedenen Formblockausgestaltungen alternierende First- und Muldenausgestaltungen (25) sowie eine generell gerade Ausgestaltung (27) umfassen.

3. Produktformvorrichtung nach Anspruch 2, **dadurch gekennzeichnet, dass** der Mündungsspalt (31, 39) sich in der Spaltgröße einstellt, um längs der Rohrwand ein konstantes Verhältnis zwischen Volumen und axialer Länge beizubehalten.

4. Produktformvorrichtung nach Anspruch 3, bei dem die Kanalmündung (31, 39) stromaufwärts und stromabwärts gelegene Mündungs-Leitvorrichtungen (35, 33) (43, 41) auf gegenüberliegenden Seiten der Kanalmündung aufweist, **dadurch gekennzeichnet, dass** wenigstens eine der Mündungs-Leitvorrichtungen ein bewegliches Teilstück (37, 49) aufweist, das sich automatisch einstellt, um den Mündungsspalt so einzustellen, dass längs der Rohrwand das konstante Verhältnis zwischen Volumen und axialer Länge beibehalten wird.

5. Produktformvorrichtung nach Anspruch 4, **gekennzeichnet durch** ein in der Länge einstellbares Glied (51), um das bewegliche Teilstück (37) von der einen der Mündungs-Leitvorrichtungen (35) einzustellen.

6. Produktformvorrichtung nach Anspruch 4, **gekennzeichnet durch** ein Gewindeglied (63) zur Einstellung des beweglichen Teilstückes (37) der Mündungs-Leitvorrichtung (37).

7. Produktformvorrichtung nach Anspruch 1, **dadurch gekennzeichnet, dass** die Vorrichtung vorprogrammiert ist, um für eine Einstellung des Mündungsspalts zu sorgen.

8. Produktformvorrichtung nach Anspruch 2, **gekennzeichnet durch** einen Sensor (41), um die verschiedenen Formblockausgestaltungen (25, 27) zu erkennen und für die automatische Einstellung des Mündungsspalts zu sorgen.

9. Produktformvorrichtung nach Anspruch 3, **gekennzeichnet durch** Mittel, die die Geschwindigkeit des wandernden Formtunnels einstellen, und die mit dem sich automatisch einstellenden Mündungsspalt zusammenwirken, um längs der Rohrwand das konstante Verhältnis von Volumen zu axialer Länge bei dem Kunststoff beizubehalten.

## Revendications

1. Appareil de formage de produits doté d'une filière (21) avec un canal d'alimentation (29, 38) qui se termine avec une embouchure (31, 39) de canal alimentant du plastique à un tunnel de moule mobile (23) comprenant des blocs moules de différentes formes de bloc moule (25, 27) qui passent au-delà de ladite embouchure de canal pour former une paroi de produit de configuration variable (3, 11), ledit appareil étant **caractérisé en ce que** ladite embouchure de canal a un écartement d'embouchure réglable qui se règle automatiquement en taille de l'écartement selon laquelle des formes de bloc moule (25) (27) est déplacée devant l'embouchure de canal pour effectuer des changements dans l'épaisseur du plastique le long de la paroi du produit.

2. Appareil de formage de produits selon la revendication 1, dans lequel ledit appareil comprend un appareil pour fabriquer une paroi de tuyau **caractérisé en ce que** lesdites différentes formes de bloc moule comprennent des formes de saillie et de creux alternées (25) et une forme généralement droite (27).

3. Appareil de formage de produits selon la revendication 2, **caractérisé en ce que** ledit écartement (31, 39) d'embouchure se règle en taille de l'écartement pour maintenir un rapport constant du volume sur la longueur axiale le long de la paroi du tuyau.

4. Appareil de formage de produits selon la revendication 3, dans lequel ladite embouchure (31, 39) de canal possède des guides (35. 33) (43, 41) d'embouchure en amont et en aval sur les côtés opposés de ladite embouchure de canal, **caractérisé en ce qu'**au moins l'un desdits guides d'embouchure possède une partie amovible (37, 49) qui se règle automatiquement pour régler l'écartement d'embouchure afin de maintenir un rapport constant du volume sur la longueur axiale le long de la paroi de tuyau.

5. Appareil de formage de produits selon la revendication 4, **caractérisé en ce qu'**il comprend un élément (51) réglable en longueur pour régler la partie mobile (37) dudit un desdits guides (35) d'embouchure.

6. Appareil de formage de produits selon la revendication 4, **caractérisé en ce qu'**il comprend un élément fileté (63) pour régler ladite partie mobile (37) dudit guide (37) d'embouchure.

7. Appareil de formage de produits selon la revendication 1, **caractérisé en ce que** ledit appareil est préprogrammé pour assurer le réglage dudit écartement d'embouchure.

8. Appareil de formage de produits selon la revendication 2, **caractérisé en ce qu'**il comprend un capteur (41) pour détecter les différentes formes (25) (27) de bloc moule et pour assurer le réglage automatique de l'écartement d'embouchure.

9. Appareil de formage de produits selon la revendication 3, **caractérisé en ce qu'**il comprend des moyens qui règlent la vitesse du tunnel de moule mobile et qui coopèrent avec l'écartement d'embouchure automatiquement réglable pour maintenir constant le rapport du volume sur la longueur axiale du plastique le long de la paroi de tuyau.
